# EUROPEAN PATENT SPECIFICATION

(11) **EP 1 045 806 B1**
(45) Date of publication and mention of the grant of the patent: **11.09.2002**
(21) Application number: 99900700.8
(22) Date of filing: 04.01.1999
(51) Int. Cl.: B65G 1/06

(54) **RACK FOR STORING ITEMS**
REGAL ZUR AUFNAHME VON GEGENSTÄNDEN
ETAGERE DE STOCKAGE D'ARTICLES

(30) Priority: 09.01.1998 NL 1008004
(43) Date of publication of application: 25.10.2000
(73) Proprietor: Van Rijn, Nicolaas Johannes Petrus, 4561 HN Hulst (NL)
(72) Inventor: Van Rijn, Nicolaas Johannes Petrus, 4561 HN Hulst (NL)
(74) Representative: Eveleens Maarse, Pieter
(86) International application number: NL9900001
(87) International publication number: WO99035061

(56) References cited:
- EP-A- 0 514 613
- DE-A- 1 756 596
- DE-A- 2 432 557
- DE-A- 2 552 914
- DE-A- 3 508 282
- DE-A- 4 330 557
- FR-A- 2 595 335
- US-A- 5 125 782
- US-A- 5 364 220

## Description

The invention relates to a rack comprising:
- a plurality of levels each having a plurality of belt or chain conveyors for supporting and moving items placed thereon, said conveyors being positioned parallel and alongside to one another,
- a set of tracks positioned above one another at at least one end of the conveyors which tracks extend transversely to the longitudinal direction of the conveyors,
- at least one rolling carriage placed on the tracks to transport items towards or from a position in front of one of the conveyors,
means on the rolling carriage for transferring items in a direction transvers to the moving direction of the rolling carriage.

Such a rack is disclosed in US-A-5125782.

In this known storage rack each level has a number (for example 10) of storage conveyors and one (or more) return conveyors. Each of the storage conveyors moves the items thereon in a direction from the inlet end towards the outlet end, whereas the return conveyor moves the items in a direction counter to the direction of travel to the storage container. This known rack is suitable only for the so-called system "first in first out" and is not appropriate for sorting the items in any desired sequence or to circulate items on the rack.

Further the actual construction of the rolling carriages is not specified in US-A-5125782.

The aim of the invention is to make the rack suitable for sorting the items in any desired sequence or to circulate the items on the rack. Another aim is to provide such an efficient construction of the rolling carriages on the tracks that the storage of items and the removal of desired items can be largely automated.

According to the invention all said conveyors have a storage function and are able to transport items in two opposite directions in such a way that items may be sorted and stored and discharged in any desired sequence, and the rolling carriages are movable on rails and that each rolling carriage is provided both with a drive mechanism to drive at least one wheel of the rolling carriage and with a drive mechanism to drive a conveyor which can move items transversely to the direction of movement of the rolling carriage.

FR-A-2595335 discloses an area for dynamic storing of flat items comprising a plurality of parallel portals and a number of carriages movable underneath said portals on rails, which extend perpendicular to the portals. The portals form a support plain for a stack of flat items and the carriages have translation means (conveyor belts or chains) which may moved up and down by elevation means (hydraulic cylinders) so that a stack of flat items may be lifted from the portals and conveyed by the translation means. To bring a stack of flat items on the portals, use is made of a separate supply carriage and a separate discharge carriage. Both carriages have a driven roller system for moving a stack of flat items in a direction perpendicular to the moving direction of the respective carriage.

The invention will now be explained with reference to the figures

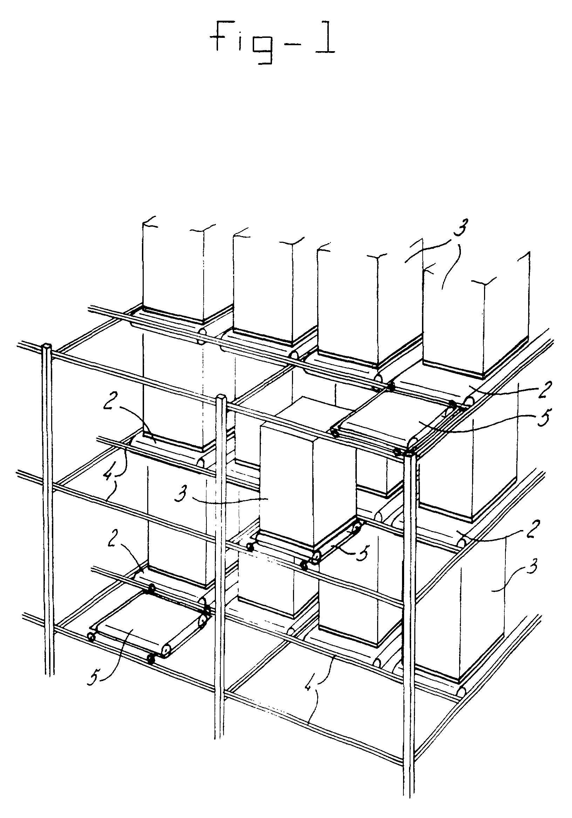

Figure 1 shows a perspective diagrammatic view of the rack according to the invention.

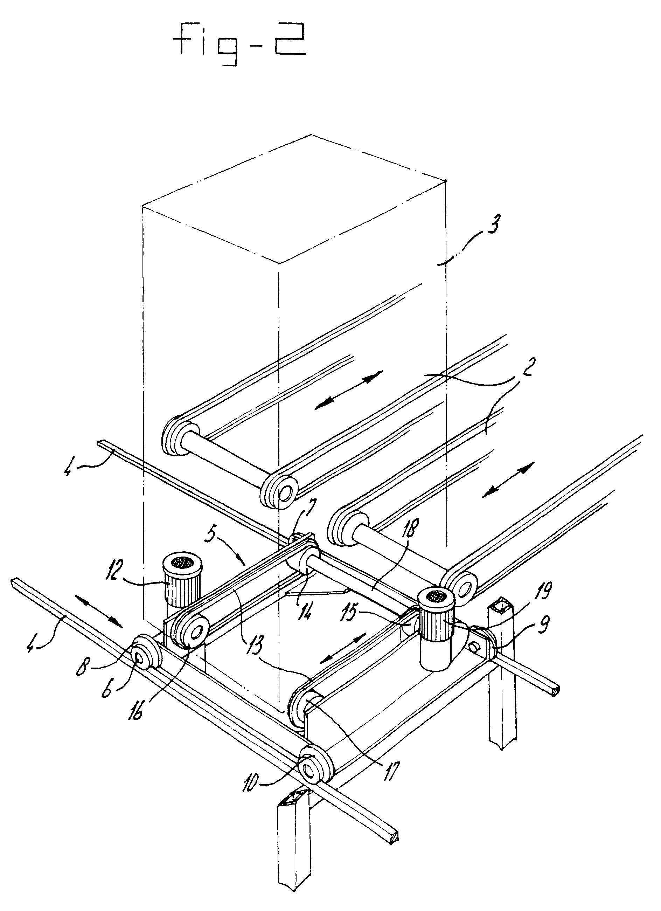

Figure 2 shows in perspective a more detailed view of one section of the rack according to Figure 1.

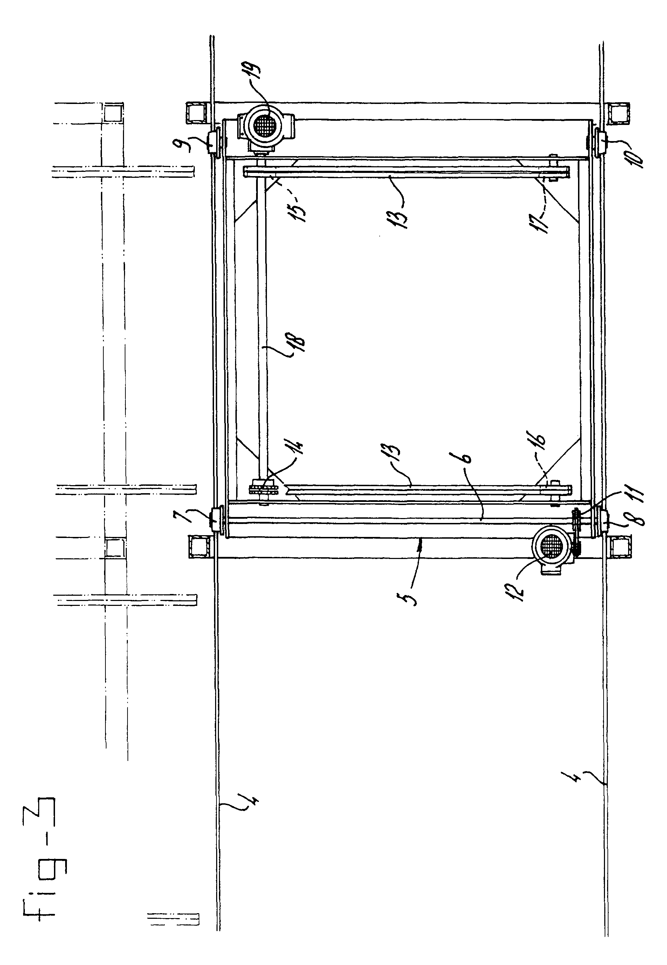

Figure 3 shows a plan view of the rolling carriage section for the rack according to Figures 1 and 2.

The section of the rack for storing items, such as loaded pallets, boxes, crates, which is shown in the figures, comprises a number of storage conveyors 2, for example belt conveyors, chain conveyors and rollers, positioned alongside and above one another, which can move items 3 placed thereon in two directions, indicated by an arrow.

A rail track 4 is arranged at the end shown and, if desired, also at the opposite end of each set of storage conveyors positioned alongside one another, on which track one or more rolling carriages are movable in a direction transverse to the longitudinal or transport direction of the storage conveyors.

The rail tracks 4 have the same mutual vertical spacing as the storage conveyors 2 and essentially extend over the width of the rack.

Each rolling carriage 5 has two wheels 7, 8 arranged on a common axle 6 and two wheels 9, 10 optionally arranged on a common axle. The axle 6 of the wheels 7, 8 can be driven by a chain drive 11 by a first motor 12 which is supported by the chassis of the rolling carriage.

A conveyor is arranged on each rolling carriage 5, the transporting surface of which conveyor is essentially in the same plane as that of the storage conveyors at the same level of the rack.

In the illustrative embodiment shown, the conveyor consists of two parallel endless duplex chains 13 which are fed round two driven double sprockets 14, 15 and round two double guide sprockets 16, 17 The sprockets 14, 15 are arranged on a common axle 18 which can be driven by a second motor 19 This motor is also supported by the chassis of the rolling carriage 5.

The rack shown can be used in the following ways:

### I. First item in, first item out

The rack has tracks 4 with one or more rolling carriages 5 at one or both ends of the storage conveyors 2. At one side, items are placed on the storage conveyors by means of a rolling carriage 5, and at the other side items are unloaded from the storage conveyors, either by means of a rolling carriage 5 which then travels to an unloading point at the end of the rail track 4 or by means of a fork lift truck. The item which will be unloaded from a storage conveyor will always be that item that, with respect to the other items on said storage conveyor, was the first to be placed on said storage conveyor.

### II. First in, last out

The rack has tracks 4 with rolling carriages 5 at only one end of the storage conveyors 2 (or the tracks 4 with rolling carriages 5 at one end of the storage conveyors are used). Items are placed on the storage conveyors by means of a rolling carriage movable on the tracks 4 and are unloaded from the storage conveyors by means of a rolling carriage 5 movable on the same tracks 4. The item which will be unloaded from a storage conveyor will always be that item that, with respect to the other items on said storage conveyor, was the last to be placed on said storage conveyor.

### III. Items circulate

The rack has tracks 4 with one or more rolling carriages 5 at both ends of the storage conveyors. A desired item that is located between a number of items on a storage conveyor is unloaded by depositing on another storage conveyor the items that are located between one track with rolling carriage and the desired item, transporting the said items on said other storage conveyor to a track with rolling carriage at the other end of the rack and then returning said items to the original storage conveyor or another storage conveyor.

### IV. Soiling

Items of different types are in arbitrary order on the storage conveyors 2. The positions in which items of the same type are located are known to the computer which controls the storage conveyors 2 and the rolling carriages 5. If a command is given to unload a specific number of items of the same type, for example a crate filled with the same vegetables, from the same rack, the relevant storage conveyors and rolling carriages will be controlled in such a way that said items of the same type are moved to an unloading point, for example at the end of a rail track 4, while items of another type which are in the way are permanently or temporarily deposited on other storage conveyors.

The essential feature of the invention is that rails are arranged at at least one side of a rack consisting of storage conveyors positioned alongside and above one another, which rails extend perpendicularly to the direction of movement of the storage conveyors and over which rails rolling carriages run, which rolling carriages have their own drive in order to move them and have a drive for a conveyor which is able to transport items in a direction transverse to the transport direction of the storage conveyor.

It is not precluded that each rolling carriage 5 has a motor which at one point in time drives the rolling carriage itself and at another point in time drives the transverse conveyor arranged on the rolling carriage.

One or more lifts can have been added to the rack to bring items from one level to another.

## Claims

1. Rack for storing items comprising:
- a plurality of levels each having a plurality of belt or chain conveyors (2) for supporting and moving items placed thereon, said conveyors (2) being positioned parallel and alongside to one another,
- a set of tracks (4) positioned above one another at at least one end of the conveyors which tracks extend transversely to the longitudinal direction of the conveyors (2),
- at least one rolling carriage (5) placed on the tracks to transport items towards or from a position in front of one of the conveyors (2),
- means on the rolling carriage (5) for transferring items in a direction transvers to the moving direction of the rolling carriage (5),
**characterized in that** all said conveyors (2) have a storage function and are able to transport items in two opposite directions in such a way that items may be sorted and stored and discharged in any desired sequence, and that the rolling carriages (5) are movable on rails (4) and that each rolling carriage (5) is provided both with a drive mechanism (11, 12) to drive at least one wheel of the rolling carriage and with a drive mechanism (19) to drive a conveyor (13) which can move items transversely to the direction of movement of the rolling carriage (5).

## Patentansprüche

1. Regal zur Aufnahme von Gegenstände mit:
- mehreren Ebenen, von denen jede mehrere Bandoder Kettenförderer (2) zum Tragen und Bewegen darauf angeordneter Gegenstände hat, wobei die Förderer (2) parallel und längsseits zueinander positioniert sind,
- einem Satz Laufbahnen (4), die übereinander, bei wenigstens einem Ende der Förderer positioniert sind, wobei die Laufbahnen sich quer zu der Längsrichtung der Förderer (2) erstrecken,
- wenigstens einem Rollwagen (5), der auf den Laufbahnen angeordnet ist, um Gegenstände in Richtung auf eine Stelle vor einem der. Förderer (2) zu oder von dieser weg zu transportieren;
- Einrichtungen auf dem Rollwagen (5) zum Befördern von Gegenständen in eine Richtung, quer zu der Bewegungsrichtung des Rollwagens (5),
**dadurch gekennzeichnet, daß** alle Förderer (2) eine Aufnahmefunktion haben und Gegenstände in zwei entgegengesetzte Richtungen derart transportieren können, daß Gegenstände sortiert und aufgenommen und abgegeben werden in jeder gewünschten Abfolge und daß die Rollwägen (5) auf Schienen (4) beweglich sind und daß jeder Rollwagen (5) sowohl mit einem Antriebsmechanismus (11, 12) zum Antrieb wenigstens eines Rades des Rollwagens, wie auch mit einem Antriebsmechanismus (19) zum Antrieb eines Förderers (13) versehen ist, der Gegenstände quer zu der Bewegungsrichtung des Rollwagens (5) bewegen kann.

## Revendications

1. Casier pour ranger des objets, comprenant :
une pluralité de niveaux ayant chacun une pluralité de convoyeurs à courroie ou à chaîne (2) pour supporter et déplacer les objets placés dessus, lesdits convoyeurs (2) étant disposés parallèlement et les uns le long des autres,
un ensemble de rails (4) disposés les uns au-dessus des autres à au moins une extrémité des convoyeurs, lesquels rails s'étendent transversalement à la direction longitudinale des convoyeurs (2),
au moins un chariot roulant (5) placé sur les rails pour transporter les objets en direction ou en provenance d'une position devant l'un des convoyeurs (2),
des moyens sur le chariot roulant (5) pour transférer les objets dans une direction transversale à la direction de déplacement du chariot roulant (5),
**caractérisé en ce que** tous lesdits convoyeurs (2) possèdent une fonction de stockage et sont capables de transporter les objets dans deux directions opposées de telle sorte que les objets puissent être triés et stockés et déchargés dans n'importe quel ordre souhaité, **en ce que** les chariots roulants (5) peuvent être déplacés sur les rails (4) et **en ce que** chaque chariot roulant (5) est muni à la fois d'un mécanisme d'entraînement (11, 12) pour entraîner au moins une roue du chariot roulant et d'un mécanisme d'entraînement (19) pour entraîner un convoyeur (13) qui peut déplacer des objets transversalement à la direction de déplacement du chariot roulant (5).
